# DEMANDE DE BREVET EUROPEEN

(11) **EP 2 254 077 A1**
(43) Date de publication de la demande: **24.11.2010**
(21) Numéro de dépôt: 09305453.4
(22) Date de dépôt: 19.05.2009
(51) Int. Cl.: G06K 19/077

(54) **Dispositif pour carte à puce conventionnelle permettant une transaction électronique à travers un réseau**

(71) Demandeur: Gemalto SA, 92190 Meudon (FR)
(72) Inventeur: Gravez, Pierre, 92197, MEUDON CEDEX (FR); Thill, Michel, 92197, MEUDON CEDEX (FR); Desjardins, Jean-Michel, 92197, MEUDON CEDEX (FR)

(57) **Abrégé**

L'invention concerne un dispositif pour adapter une carte à puce conventionnelle pour que celle-ci puisse communiquer par exemple avec une carte d'identité d'abonné d'un terminal disposant d'une interface de communication sans contact de proximité conforme à l'art antérieur afin de pouvoir mettre en oeuvre une transaction électronique à travers un réseau de télécommunication.

## Description

L'invention concerne un procédé pour effectuer des transactions à travers un réseau au moyen de cartes à puce et de terminaux. De manière préférée l'invention concerne un procédé pour effectuer de telles transactions à travers un réseau de télécommunications au moyen de cartes à puce et de terminaux de télécommunication.

Elle concerne plus particulièrement un dispositif permettant de mettre en oeuvre le procédé. L'invention trouve de nombreuses applications dans les transactions monétaires, le porte-monnaie électronique, les transactions relatives à la santé, aux jeux.

Les réseaux de télécommunications concernés sont tous les réseaux susceptibles d'être empruntés par un abonné du téléphone pour accéder à un autre abonné ou à des services.

Parmi ces réseaux on peut citer les réseaux de téléphonie, réseau commuté ou réseau à intégration de services et le réseau de téléphonie cellulaire.

Certains terminaux de télécommunication sont équipés ou adaptés pour disposer de deux interfaces de lecture de cartes à puce, l'une pour communiquer avec une carte à puce d'identification d'abonné dédiée à la téléphonie telle que par exemple une carte SIM (*Subscriber Identity Module*) dans le cas du système de télécommunication cellulaire et l'autre pour une carte à puce dite carte applicative dédiée à une ou plusieurs applications autres que la téléphonie. Il pourra s'agir par exemple d'une carte de type portemonnaie électronique ou carte de débit et/ou de crédit.

Les cartes à puce dédiées à une ou plusieurs applications autres que la téléphonie peuvent être délivrées par des opérateurs indépendants. Il s'avère nécessaire par conséquent que de tels terminaux de télécommunication supportent des jeux de commandes applicatifs dédiés à différents types de cartes applicatives (par exemple une application bancaire, une application de fidélité).

Ceci est particulièrement contraignant pour les prestataires de services qui doivent de ce fait établir des liens et accords avec à des fabricants de terminaux pour proposer leurs applications à leurs clients.

De plus, cela impose une limitation dans le choix des cartes applicatives utilisables avec un terminal de télécommunication donné, à celles qui auront été prévues initialement sous peine d'avoir à modifier les logiciels du terminal.

Pour palier à cet inconvénient une solution décrite notamment en liaison avec le document EP1032925 permet de ne pas alourdir les interfaces logiques de communication d'un terminal tout en lui permettant d'accepter toute carte applicative en introduisant des moyens de communication à toute carte d'identification d'abonné dédiée à la téléphonie pour lui permettre de piloter toute carte applicative à travers le terminal de télécommunication.

Ce type de solution nécessite toutefois une adaptation d'un terminal afin qu'il puisse communiquer avec deux cartes. Cette solution peut s'avérer couteuse. Elle nécessite également une adaptation de la carte d'identification d'abonné pour qu'elle dispose d'un jeu de commandes destinées à piloter la carte additionnelle.

Pour palier à cet inconvénient, des cartes à puce d'identification d'abonné permettent d'héberger directement des applications autres que dédiées à la téléphonie. Bien que cette solution permette de s'affranchir des inconvénients précités, elle soulève d'autres difficultés liées notamment au fait que la carte d'identification d'abonné est la propriété d'un opérateur de téléphonie mobile et qu'il faille donc une entente entre ledit opérateur et le tiers opérant ladite application spécifique bancaire ou autre.

L'avènement de nouvelles techniques telles le NFC (*Near Field Communication* en langue anglaise) ouvre la porte à de multiples applications utilisant un téléphone mobile. Nous pouvons citer à titre d'exemples non limitatifs le paiement dans un magasin, le paiement d'un ticket de transport, la saisie d'une information à partir d'une affiche publicitaire, l'identification pour permettre un accès etc. Un des objectifs d'un protocole de communication de proximité est notamment de simplifier la connectivité pour l'utilisateur tout en garantissant une transaction sécurisée. Selon la technique NFC, la puissance d'émission est résolument très faible afin de s'affranchir de l'utilisation d'une source d'énergie au niveau des objets communicants. Ainsi l'échange d'information entre deux appareils communiquant ne peut s'effectuer qu'à une distance maximale de l'ordre d'une dizaine de centimètres. La technique NFC garantie une forme de sécurité par l'usage d'un encodage et d'un chiffrement offerts par ledit protocole. Trois modes sont définis pour utiliser la technique NFC : le mode dit d'émulation de carte, le mode lecteur et le mode « Peer-to-Peer ».

Le mode d'émulation de carte permet d'émuler le fonctionnement d'une carte à puce sans contact de crédit par exemple pour assurer notamment une fonction de sécurité. Selon cette technique une carte d'identification d'abonné (*Subscriber Identity Module*), dispose de moyens lui permettant de mettre en oeuvre un protocole tel le SWP (*Single Wire Protocol*) servant à assurer le lien physique entre la carte et une interface NFC du terminal de communication utilisée pour le contrôle des communications.

Le mode lecteur permet à un utilisateur, tel un terminal de communication, de lire des informations émanant par exemple d'étiquettes électroniques passives en approchant son terminal de communication sur des affiches, sur des colis ou sur des cartes de visites. Le mode « Peer-to-Peer », permet à un terminal de communication d'échanger des informations avec un autre terminal de communication comme, par exemple, des fichiers ou des contacts selon le principe similaire à celui proposé par la technologie Bluetooth par exemple.

La technique NFC offre à ce jour un débit de 424 kbps dans une bande de fréquence de 13,56 Mhz à une distance maximum de 10 cm. A la différence de la technologie RFID (*Radio Frequency IDentification*), les communications NFC s'appuient sur le lecteur pour transmettre la puissance à la puce lue par radiofréquence.

Ainsi il est possible et connu à ce jour de doter une carte d'identification d'abonné d'un terminal de téléphonie du protocole de communication SWP. Une telle carte peut lire et exploiter une carte applicative disposant d'une antenne pour mettre en oeuvre une communication sans contact de type OSI 14443 notamment. Une carte de transport par exemple utilisant une communication sans contact peut ainsi facilement être créditée au moyen de la carte d'identification d'abonné. En outre, ladite carte de transport ne dispose pas de moyens fournisseurs d'énergie électrique tels une batterie. La puissance nécessaire à la communication est délivrée par la par le terminal de communication via les signaux radioélectriques délivrés par celui.

Toutefois, un grand nombre de cartes bancaires dites conventionnelles de type débit et/ou crédit ne dispose pas à ce jour de la fonction sans contact mais nécessite une communication « filaire » normalisée, telle que définie notamment par la norme OSI 7816, avec un lecteur au moyen d'un module et de contacts électriques. Ainsi pour mettre en oeuvre actuellement une transaction de paiement au moyen par exemple d'un terminal de télécommunication et d'une carte de débit/crédit conventionnelle, il est nécessaire que le terminal puisse disposer de deux interfaces conformément à ce que préconise le document EP1032925 notamment.

L'invention vise à résoudre les inconvénients cités précédemment en permettant au moyen d'un dispositif d'adapter une carte à puce conventionnelle pour que celle-ci puisse communiquer avec une carte d'identité d'abonnée apte à mettre en oeuvre un protocole de communication de proximité, tel le protocole SWP sans avoir à adapter ladite carte conventionnelle et le terminal de communication.

A cette fin, il est prévu un dispositif porte-carte apte à interfacer avec une carte à puce conventionnelle comportant
- des moyens pour émettre et/ou recevoir des signaux radioélectriques à destination et/ou en provenance d'un terminal selon un protocole de communication sans contact de proximité ;
- des moyens pour contrôler la communication entre lesdits moyens pour émettre et/ou recevoir et le terminal, aptes à traduire :
   - des signaux radioélectriques reçus en commandes interprétables par la carte à puce conventionnelle ;
   - des réponses de ladite carte à puce conventionnelle en signaux radioélectriques.

Selon un mode de réalisation, les moyens pour contrôler la communication peuvent délivrer en outre une alimentation électrique nécessaire au fonctionnement de la carte à puce conventionnelle à partir de signaux radioélectriques reçus depuis un terminal afin que ladite carte puisse répondre aux sollicitations dudit terminal.

L'invention prévoit que le dispositif puisse comporter en outre des moyens de redressement pour transformer une partie des signaux radioélectriques reçus en signal continu pour charger des moyens de stockage d'énergie aptes à délivrer une alimentation électrique nécessaire au fonctionnement de la carte à puce conventionnelle afin que ladite carte puisse répondre aux sollicitations d'un terminal.

Selon ce mode de réalisation les moyens de stockage d'énergie peuvent délivrer en outre une alimentation nécessaire au fonctionnement des moyens de contrôle de la communication. A titre, d'exemple l'invention prévoit que lesdits moyens de stockage d'énergie puissent comporter une capacité.

Un tel dispositif peut comporter en outre des moyens pour déterminer le niveau d'énergie disponible permettant d'assurer le fonctionnement des moyens de contrôle de la communication et/ou de la carte à puce conventionnelle. Les moyens pour déterminer le niveau d'énergie peuvent ainsi transmettre une information d'alerte aux moyens de contrôle de la communication lorsque le niveau d'énergie atteint un seuil minimal prédéterminé.

Selon ce mode de réalisation, il peut être prévu que les moyens de contrôle de la communication puissent interpréter l'information d'alerte délivrée par les moyens pour déterminer le niveau d'énergie disponible et puissent transmettre une requête à destination du terminal pour temporiser le flux de communication et permettre aux moyens de stockage de recouvrer un niveau d'énergie supérieur au seuil minimal prédéterminé.

L'invention prévoit que selon une réalisation préférée, les moyens de contrôle de la communication puissent comporter un calculateur électronique apte à mettre en oeuvre la technique « *Near Field Communication* ».

D'autres caractéristiques et avantages apparaîtront plus clairement à la lecture de la description qui suit et à l'examen des figures qui l'accompagnent parmi lesquelles :
- la figure 1 présente une carte à puce conventionnelle de type carte de débit/crédit ;
- la figure 2 décrit un terminal de communication communiquant avec une étiquette électronique passive selon une technique connue ;
- la figure 3 présente un mode de réalisation d'un dispositif conforme à l'invention ;
- les figures 4 et 5 illustrent respectivement un schéma fonctionnel de réalisation d'un dispositif conforme à l'invention selon deux modes de réalisation préférée.

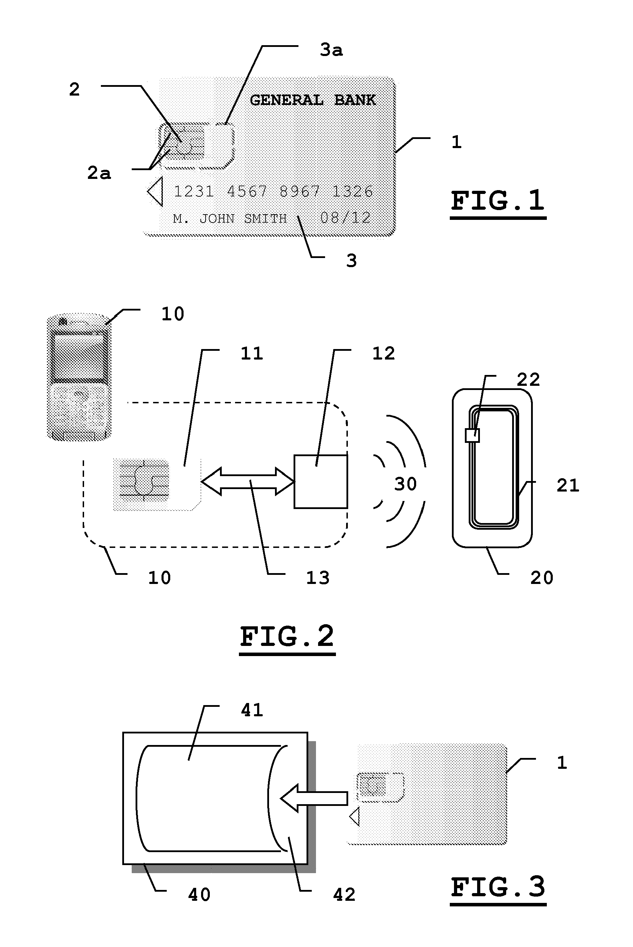

La figure 1 décrit une carte à puce 1 dite conventionnelle composée d'un corps de carte 3 généralement en matière plastique sur lequel on peut retrouver des indications graphiques propres à un opérateur bancaire par exemple et à utilisateur. Ainsi selon la figure 1, le corps 3 porte d'une part une inscription « General Bank » pour signifier qu'il s'agit d'une carte bancaire délivrée par la banque « General Bank » ainsi qu'une inscription « John Smith » propre à l'utilisateur de la carte 1. Selon l'exemple illustré en liaison avec la figure 1, le corps 3 comporte un numéro de carte unique « 1231 4567 8967 1326 » et une date de validité « 08/12 ». Le corps d'une carte à puce conventionnelle peut comporter une découpe 3a permettant le cas échéant de réduire la surface du corps de carte pour l'insérer dans des lecteurs de taille réduite. La carte conventionnelle 1 comporte un module 2 protégeant un microcontrôleur non représenté. Ledit module 2 comprend en outre une série de contacts électriques 2a. Chaque contact est relié au microcontrôleur afin de transmettre des signaux électriques tels une tension d'alimentation nécessaire au fonctionnement de la carte, une horloge, des signaux de données etc. Une carte à puce conventionnelle se distingue ainsi d'une carte à puce dite « sans contact » par la présence desdits contacts électriques en lieu et place d'une antenne.

Une carte à puce conventionnelle 1 communique généralement avec un lecteur au moyen d'un protocole de communication défini par une norme telle la norme OSI 7816. Le lecteur comporte une interface de type contacts électriques aptes à établir une communication physique et directe avec les contacts 2a d'une carte à puce conventionnelle.

La figure 2 permet d'illustrer un exemple de communication connu entre un terminal de communication de type téléphone mobile 10 et un objet électronique communiquant 20 tel une étiquette électrique passive ou une carte à puce sans contact. Selon cet exemple un téléphone mobile 10 comporte un module d'identité d'abonné 11 sous la forme d'une carte à puce conventionnelle dédiée à un abonné, généralement connu sous le vocable SIM (*Subscriber Identity Module*). Ladite carte 11 est reliée à une interface d'entrée-sortie non représentée du terminal 10. La carte à puce 11 contient principalement un microcontrôleur, une mémoire de type ROM (*Read Only Memory*) incluant un système d'exploitation et des algorithmes de communication, d'application et d'authentification spécifiques. Ledit microcontrôleur comporte en outre une mémoire non volatile par exemple de type EEPROM (*Electrically-Erasable Programmable Read-Only Memory*) qui contient toutes les caractéristiques liées à l'abonné, notamment l'identité internationale de l'abonné IMSI (*International Mobile Subscriber Identity*).

Le terminal de communication 10 comporte en outre une interface de communication 12 pour contrôler la communication avec le monde extérieur audit terminal selon un protocole de communication sans contact de proximité. A titre d'exemple ladite interface 12 est une interface NFC mettant en oeuvre le mode lecteur. Le terminal peut ainsi entrer en communication avec un objet communiquant 20 sous la forme d'une étiquette électronique passive ou une carte à puce sans contact. L'objet 20 comporte ainsi une antenne 21 reliée à un microcontrôleur 22 permettant d'émettre voire de recevoir des messages radioélectriques conformes par exemple à la norme internationale OSI 14443.

Pour permettre à la carte 11 d'échanger avec l'objet 20, la carte d'identification d'abonné 11 supporte le protocole de communication SWP servant à assurer le lien physique entre la carte 11 et l'interface NFC 12 du terminal de communication 10. Ainsi les requêtes à destination de l'objet 20 émanant de la carte 11 suivant le protocole 13 SWP sont traduites en signaux radioélectriques 30 par l'interface 12 NFC. Réciproquement les réponses 30 de l'objet 20 sous la forme de signaux radioélectriques 30 sont traduits par l'interface 12 NFC du terminal en messages conformes au protocole SWP directement interprétables par la carte d'identification d'abonné 11.

Pour pouvoir dialoguer avec un serveur d'applications distant (non représenté), la carte d'identification d'abonné 11 est dite proactive c'est-à-dire apte à déclencher des actions dans le terminal de communication 10 au moyen par exemple de commandes pré-formatées suivant un protocole de communication de type « T=0 » défini par la norme OSI 7816-3 et encapsulées selon les recommandations du standard GSM 11.14 généralement connues sous le vocable « SIM - Toolkit ».

Ainsi, la carte d'identification d'abonné 10 peut piloter une transaction par exemple de transport permettant de créditer des titres de transport depuis un serveur distant vers une carte de transport 20 sans contact au travers d'un terminal de communication 10.

Il existe aujourd'hui très peu de cartes à puce de type débit et/ou crédit supportant la fonction de communication sans contact. La très grande majorité de ce type de carte sont des cartes conventionnelles nécessitant une connexion physique avec une interface de communication au moyen de contacts électriques comme illustré en lien avec la figure 1.

Pour palier à ce fait, l'invention prévoit selon la figure 3, un dispositif 40 apte à interfacer avec une carte à puce conventionnelle 1. La fonction principale dudit dispositif est de permettre à ladite carte 1 de communiquer avec une carte d'identité d'abonné 11 telle que celle décrite en liaison avec la figure 2.

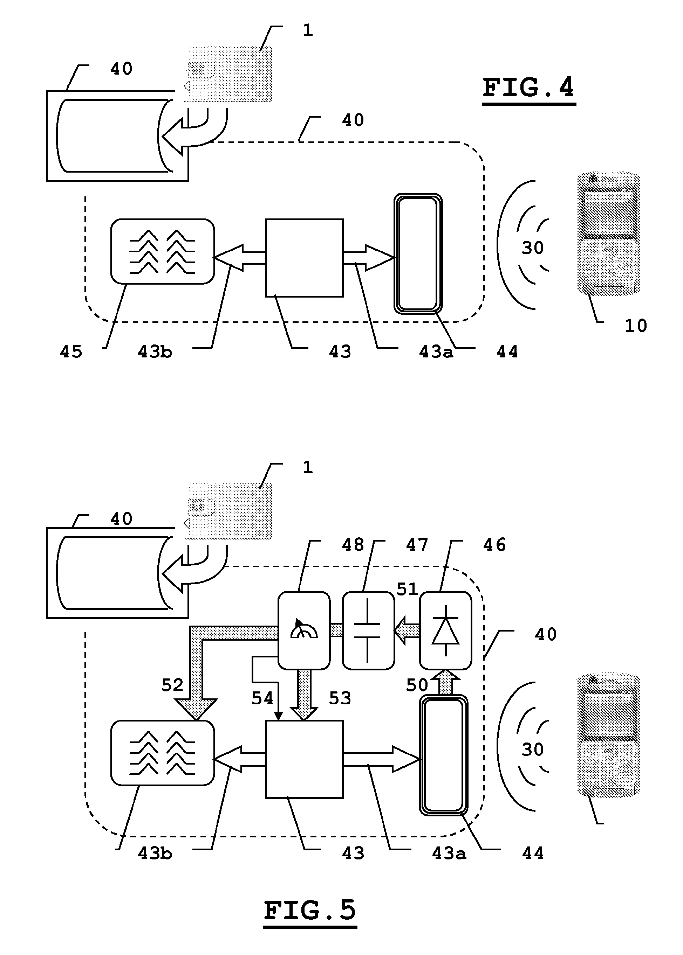

Le dispositif 40 comporte un logement 41 apte à recevoir tout ou partie d'une carte à puce conventionnelle afin de maintenir celle-ci en communication conformément notamment à deux variantes de réalisation présentées respectivement par les figures 4 et 5. Ainsi selon la figure 3, le dispositif 40 peut s'apparenter à un porte-carte dont le corps comporte une ouverture 42 permettant d'insérer une carte conventionnelle 1 dans un logement 41. Le dispositif 40 peut prendre tout format de nature à lui permettre d'interfacer avec une carte conventionnelle 1 quels que soient le format et la taille de celle-ci.

La figure 4 présente un premier mode de réalisation d'un dispositif 40 conforme à l'invention.

Ainsi le dispositif 40 comporte une interface de communication sous la formes d'une séries de contacts électriques 45 aptes à assurer une liaison électrique avec les contacts électriques 2a d'une carte à puce conventionnelle 1 telle que décrite en figure 1. Cette dernière peut ainsi communiquer selon un protocole de communication 43b du type OSI 7816 avec un microcontrôleur 43. Ce dernier est par ailleurs connecté à des moyens 44 du type antenne ou bobine pour émettre et/ou recevoir des signaux radioélectriques 43a à destination et/ou en provenance d'un terminal de communication 10 selon un protocole de communication sans contact de proximité. Le microcontrôleur 43 contrôle ainsi la communication entre lesdits moyens pour émettre et/ou recevoir 44 et le terminal de communication 10.

Ledit microcontrôleur 43 traduit ainsi :
- des signaux radioélectriques reçus 43a en commandes 43b interprétables par la carte à puce conventionnelle 1;
- des réponses 43b de ladite carte à puce conventionnelle 1 en signaux radioélectriques 43a.

Selon un exemple d'application, un terminal de communication 10, tel que décrit en lien avec la figure 2, s'approche d'une carte à puce conventionnelle 1 telle que décrite en lien avec la figure 1, ladite carte à puce étant insérée dans un dispositif 40 conforme à l'invention tel qu'illustré par la figure 3. Le champ 30 généré par le terminal de communication 10 réveille le microcontrôleur 43 du dispositif 40 sous l'action de l'antenne 44. Le champ 30 permet audit microcontrôleur 43 de survenir à ses besoins électriques pour assurer son fonctionnement. Selon la figure 4, ledit champ 30 délivre suffisamment d'énergie au microcontrôleur 43 pour que ce dernier puisse également alimenter suffisamment la carte 1 au moyen des contacts électriques 2a et 45. Ainsi la carte à puce 1 peut aussi être réveillée et transmettre une réponse 43b destinée à se présenter au microcontrôleur 43. Ce dernier traduit ladite réponse en signaux radioélectriques 43a acheminées par le champ 30 à l'interface NFC du terminal. A titre d'exemple pour réaliser cette opération de traduction le microcontrôleur 43 est apte à mettre en oeuvre le mode émulation de carte de la technique NFC. A son tour l'interface 12 du terminal de communication transmet le message de présentation de la carte à puce 1 à la carte d'identité d'abonnée 11 au moyen du protocole SWP. A ce stade, la carte 11 peut déclencher un traitement applicatif au moyen de commandes proactives à destination d'un serveur d'applications distant ou à destination de la carte à puce 1 au moyen du protocole SWP. Ainsi grâce à l'invention la carte à puce 1 bien que conventionnelle peut communiquer avec un terminal et/ou une carte d'identité d'abonnée selon l'art antérieur et être au centre d'une transaction électronique avec un serveur d'application distant.

La communication entre la carte conventionnelle 1 et le microcontrôleur, le fonctionnement de ladite carte peuvent parfois nécessiter une énergie électrique supérieure à celle délivrée par le microcontrôleur 43. Aussi la figure 5 permet d'illustrer un mode de réalisation préférée dans lequel le dispositif 40 comporte en outre des moyens aptes à délivrer une alimentation électrique nécessaire au fonctionnement de la carte à puce conventionnelle 1 afin que ladite carte puisse répondre aux sollicitations d'un terminal de communication 10.

Ainsi un dispositif 40 comporte en outre des moyens de redressement 46 pour transformer une partie 50 des signaux radioélectriques reçus au travers du champ 30 en un signal continu 51 pour charger des moyens de stockage d'énergie 47. A titre d'exemple, lesdits moyens de stockage d'énergie comportent une ou plusieurs capacités réservoir. Les moyens 47 sont ainsi aptes à délivrer une tension d'alimentation à la carte à puce conventionnelle 1 voire au microcontrôleur 43. L'exemple d'application décrit en lien avec la figure 4 est ainsi pérennisé par l'adjonction des moyens 46 et 47.

Selon une variante de réalisation, un dispositif 40 conforme à l'invention peut comporter en outre des moyens 48 pour déterminer le niveau d'énergie disponible et livrable notamment par les moyens de stockage d'énergie 47. Lesdits moyens 48 pour déterminer le niveau d'énergie peuvent transmettre une information d'alerte 54 au microcontrôleur 43 lorsque le niveau d'énergie atteint un seuil minimal prédéterminé. Ainsi le microcontrôleur 43 chargé du contrôle de la communication peut interpréter l'information d'alerte 54 délivrée et transmettre une requête à destination du terminal de communication 10 pour temporiser le flux de communication et permettre aux moyens de stockage 47 de recouvrer un niveau d'énergie supérieur au seuil minimal prédéterminé. Durant le temps de « recharge » des moyens de stockage, la carte conventionnelle 1 peut être mise en sommeil. Selon l'invention une pluralité de seuils peut être utilisée, un seuil pour les besoins de la carte à puce conventionnelle, un autre pour le microcontrôleur etc.

Pour pouvoir temporiser le flux de communication, l'invention prévoit que le microcontrôleur 43 puisse transmettre des signaux électriques 43a dédiés à une requête de suspension provisoire de communication à destination du terminal de communication 10. En variante, une telle requête peut se traduire par des paramètres de communication transmis au moyen du champ 30 permettant de ralentir voire d'accélérer le flux. Il peut par ailleurs également s'agir de codes de contrôle véhiculés par le champ 30 et conformes au protocole OSI 14443 destinés à cette fin. Ainsi le microcontrôleur 43 remplit l'intégralité de son rôle de contrôle de la communication :
- en maitrisant le flux de communication afin de disposer de l'énergie suffisante au fonctionnement de la carte à puce conventionnelle et ;
- en traduisant les messages et réponses d'une carte à puce conventionnelle dialoguant selon un premier protocole dit « filaire » de type OSI 7816 en signaux radioélectriques tels que définis par exemple par le standard OSI 14443.

L'invention a été décrite selon un mode de réalisation préférée utilisant la technique NFC permettant une communication sans contact de proximité. Toutefois, l'invention ne serait être limitée par ladite technique.

En outre l'invention a été également décrite en liaison avec une application préférée mettant en situation un terminal de communication du type téléphone mobile apte à mettre en oeuvre une transaction électronique au travers d'un réseau de télécommunication.

Selon une autre application, le terminal est un terminal de type bancaire à l'aide duquel il est possible d'effectuer des transactions électroniques réalisées au travers d'un réseau par exemple opéré par un opérateur bancaire. Dans ce cas, un tel terminal est apte à mettre en oeuvre des commandes à destination d'un serveur d'une banque par exemple, et à destination d'une carte à puce conventionnelle de débit et/ou crédit telle que décrite en liaison avec la figure 1, ladite carte étant insérée au préalable dans un dispositif porte-carte conforme à l'invention et tel que représenté en figure 3. Ce dernier communique avec le terminal selon un mode analogue à celui décrit en liaison avec les figures 4 et 5.

Selon cette autre application, un terminal bancaire est substitué au téléphone mobile 10 représenté sur lesdites figures 4 et 5. Le terminal bancaire peut être situé au sein d'une agence d'une banque ou directement chez un commerçant par exemple.

Selon une troisième application, le terminal bancaire peut être remplacé par un ordinateur portable ou tout autre appareil électronique par exemple de type PDA apte à assurer le rôle d'un terminal communiquant avec un dispositif porte-carte conforme à l'invention.

## Revendications

1. Dispositif porte-carte (40) apte à interfacer (45) avec une carte à puce conventionnelle (1) **caractérisé en ce qu'**il comporte :
- des moyens pour émettre et/ou recevoir (44) des signaux radioélectriques (43a) à destination et/ou en provenance d'un terminal (10) selon un protocole de communication sans contact de proximité ;
- des moyens (43) pour contrôler la communication entre lesdits moyens pour émettre et/ou recevoir et le terminal, aptes à traduire :
- des signaux radioélectriques reçus (43a) en commandes (43b) interprétables par la carte à puce conventionnelle ;
- des réponses de ladite carte à puce conventionnelle en signaux radioélectriques.

2. Dispositif selon la revendication 1 **caractérisé en ce que** les moyens pour contrôler (43) la communication délivrent en outre une alimentation électrique nécessaire au fonctionnement de la carte à puce conventionnelle (1) à partir de signaux radioélectriques (43a) reçus depuis un terminal (10) afin que ladite carte (1) puisse répondre aux sollicitations dudit terminal.

3. Dispositif selon les revendications 1 ou 2 **caractérisé en ce qu'**il comporte en outre des moyens de redressement (46) pour transformer une partie (50) des signaux radioélectriques reçus en signal continu (51) pour charger des moyens de stockage d'énergie (47) aptes à délivrer une alimentation électrique (54) nécessaire au fonctionnement de la carte à puce conventionnelle (1) afin que ladite carte (1) puisse répondre aux sollicitations d'un terminal (10).

4. Dispositif selon la revendication 3 **caractérisé en que** les moyens de stockage d'énergie (47) délivrent en outre une alimentation (53) nécessaire au fonctionnement des moyens de contrôle (43) de la communication.

5. Dispositif selon les revendications 3 ou 4 **caractérisé en que** les moyens de stockage d'énergie (47) comportent une capacité.

6. Dispositif selon l'une quelconque des revendications 2 à 5 **caractérisé en qu'**il comporte en outre des moyens pour déterminer (48) le niveau d'énergie disponible permettant d'assurer le fonctionnement des moyens de contrôle de la communication et/ou de la carte à puce conventionnelle (1) et en ce que lesdits moyens pour déterminer (48) le niveau d'énergie transmettent une information d'alerte (54) aux moyens de contrôle (43) de la communication lorsque le niveau d'énergie atteint un seuil minimal prédéterminé.

7. Dispositif selon la revendication 6 **caractérisé en que** les moyens de contrôle de la communication interprètent l'information d'alerte (54) délivrée par les moyens pour déterminer (48) le niveau d'énergie disponible et sont aptes à transmettre une requête à destination du terminal pour temporiser le flux de communication et permettre aux moyens de stockage (47) de recouvrer un niveau d'énergie supérieur au seuil minimal prédéterminé.

8. Dispositif selon l'une quelconque des revendications précédentes **caractérisé en que** les moyens de contrôle de la communication comportent un calculateur électronique apte à mettre en oeuvre la technique « Near Field Communication ».
